Europäisches Patentamt

European Patent Office

Office européen des brevets

(19)

(11) Publication number: **0 068 604**
**A2**

(12) ## EUROPEAN PATENT APPLICATION

(21) Application number: **82302089.6**

(51) Int. Cl.³: **G 01 D 3/02**

(22) Date of filing: **23.04.82**

(30) Priority: **24.04.81 GB 8112721**

(43) Date of publication of application: **05.01.83**
**Bulletin 83/1**

(84) Designated Contracting States: **DE FR**

(71) Applicant: **Wolfendale, Peter Caleb Frederick, 33 Pound Hill Great Brickhill, Milton Keynes, Bucks. MK17 9AS (GB)**

(72) Inventor: **Wolfendale, Peter Caleb Frederick, 33 Pound Hill Great Brickhill, Milton Keynes, Bucks. MK17 9AS (GB)**

(74) Representative: **Cole, Paul Gilbert et al, Hughes Clark Andrews & Byrne 63 Lincoln's Inn Fields, London WC2A 3JU (GB)**

(54) **Improvements in transducers.**

(57) A transducer such as a capacitative displacement transducer has a transducer module and a processor module. In the transducer module are an analog transducer 12 and a store in which calibration data for the transducer is recorded in digital form. In the processor module is an analog to digital converter 13 and calculating means 14 that obtains calibration data from the store and uses it to calculate and output a true value of the measured parameter. Electrical connections 10 between the transducer module and the processor module are arranged so that both the transducer and its associated store are connected to the processor module so that when one transducer module is replaced by another similarly manufactured and calibrated module the digital calculating means 14 receives calibration data from the store associated with the new transducer and the assembly maintains a true output.

IMPROVEMENTS IN TRANSDUCERS

This invention relates to a method of incorporating a calibration into a transducer package. The following description relates particularly to capacitative transducers. However, the method may apply to any transducer system which has a sufficiently stable characteristic.

Linear capacitative displacement transducers can be manufactured which will give a continuously variable capacitance with respect to displacement. In order to use the variation in capacity as a measure of displacement the relation between the two must be known with sufficient precision to give an output signal of the required accuracy. However, if an exact and repeatable relationship between displacement and output signal is to be achieved, the transducer may cost too much to produce.

Thus with a particular design of capacitative displacement transducer, the stability of the relationship between capacity change and linear displacement may be as high as a few parts per million. But when the characteristics of one transducer are compared with another similar transducer manufactured at the same time or under similar circumstances, the peak to peak differences in the calibration curves may be as much as a few thousand parts per million. Hitherto it has been attempted to standardise the manufacturing process so as to produce transducers having identical characteristics. But I now believe that it may be more expedient to accept variations in behaviour within a range of acceptable properties and to build in a calibration correction. If now an appropriate correction is built into each transducer, then the departure of the output signal of each from an ideal "straight line" or linear law may be reduced by any desired degree. The limitation of such correction is the stability of the transducer law and not the variability between different transducers. In the said capacitative transducer, calibration accuracies of a few parts per million may be possible with careful design and different transducers may be interchanged with maintenance of that degree of accuracy.

The invention provides a transducer assembly comprising in combination:

a transducer module including an analog transducer which gives a signal dependent on the value of a property being measured and a store associated with the transducer in which calibration data for the transducer is recorded in digital form;

a processor module including an analog to digital converter for digitising the output signal from the transducer and digital calculating means arranged to receive the signal from the analog to digital converter, obtain calibration data from the store, therefrom calculate a true value of the parameter and cause said true value to be supplied as an output; and

electrical connections between the transducer module and the processor module connecting both the transducer and its associated store to the processor module so that when one transducer module is replaced by another similarly manufactured and calibrated transducer module the digital calculating means receives calibration data from the store associated with the new transducer and the assembly maintains a true output.

In another aspect the invention provides a transducer assembly comprising a transducer member, a store associated with the transducer member in which calibration data for that transducer is recorded in digital form, which data may be used to modify the apparent output to give a true output corresponding to the intended transducer law, and electrical connections to the transducer arranged so that whenever the transducer member is connected to a processor module the associated store is also connected thereto.

A calibration curve in the form of a polynomial expression may be built into the transducer. This polynomial represents the calibration curve of a particular transducer and is unique to that transducer. The transducer designer and manufacturer can now concentrate on stability and reproducibility while a built in calibration device defines the law which connects the input variable with the output variable of the transducer to whatever degree of accuracy is needed and is justified by the stability of the transducer.

Figure 1 is a schematic block diagram showing a processor module and a replaceable transducer module therefor, the interconnection between the transducer module and the processor module containing calibration information;

Figure 2 is a graph of output against displacement for the transducer of Figure 1 before and after correction;

Figure 3a is a schematic block diagram of a linear capacitative displacement transducer formed by a row of discrete plates; Figure 3b is a view of a single transducer plate moving past a series of plates; Figure 3c is similar to Figure 3b but shows cylindrical electrodes; and Figure

4    0068604

3d represents schematically the energisation of a pair of electrodes in the transducer;

Figure 4 is a graph of output against displacement for the transducer of Figures 3a, 3b and 3d; and

Figure 5 is a schematic view of an angular capacitative displacement transducer using discrete plates.

Various practical methods of incorporating the aforesaid polynomial into the transducer are described below.

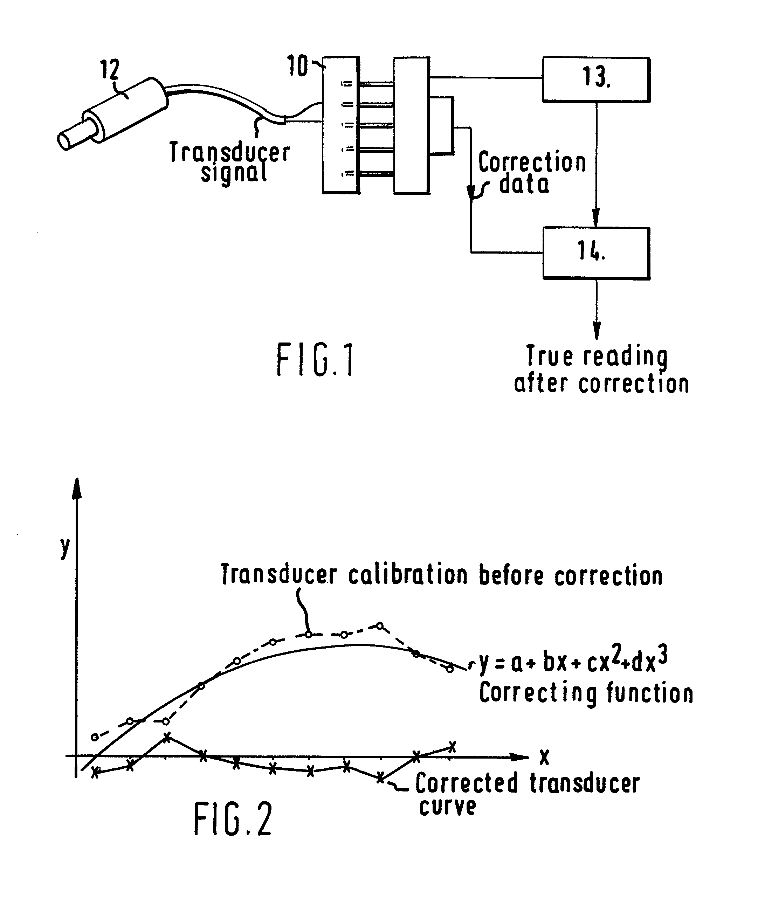

A multi-way plug and socket are used (Figure 1). The pins of the plug 10 are connected in a binary pattern which represents the calibration. Suppose that a 25 way plug is used and that 5 leads of this plug are used as connections to the transducer 12 via analog to digital converter 13. This leaves 20 pins free. One can then represent the equation $y = a + bx + cx^2 + dx^3$ by assigning values to a, b, c, d such that if y is the displacement and x the capacitance or capacitance ratio of the capacitance transducer, then the resultant $y = f(x)$ conforms to whatever required law, eg. linear, or parabolic, or inverse etc. is desired (see Figure 2). The presence of this fixed calibration factor on the said multiway electrical connector, may be used to modify the response of the device, ie. to convert the measured value of a variable into a true value which may be used for direct measurement.

Typically a digital processor 14 will multiply the apparent setting y of the transducer by the polynomial recorded on the plug. If for example in the equation mentioned a, b, c, d are defined by 5 binary digits each, then each element can have $\pm$ 0 to 16 as a multiplier. In practice the type of error found in some transducers may require only that b and c are assigned values and also that b should have say 12 bit resolution. In other situations an even higher order polynomial might be envisaged.

As an alternative to storing the digits in a "hard wired" pattern on a plug and socket arrangement, the digital data can be stored on some other digital storage medium. One such storage device is a "Programmable Read Only Memory" or PROM. This device may have the calibration characteristics of a particlar transducer recorded on it in digital form. The transducer is connected to a device which converts the transducer setting into a usable signal. The device recognises the transducer output, digitises the output, uses the digital setting to operate a correcting device such as a digital adder or multiplier, derives the factor for correction from the PROM store by addressing the PROM in the usual manner, and interprets the data stored in that address in such a way as to allow the transducer apparent setting to be modified to a true setting.

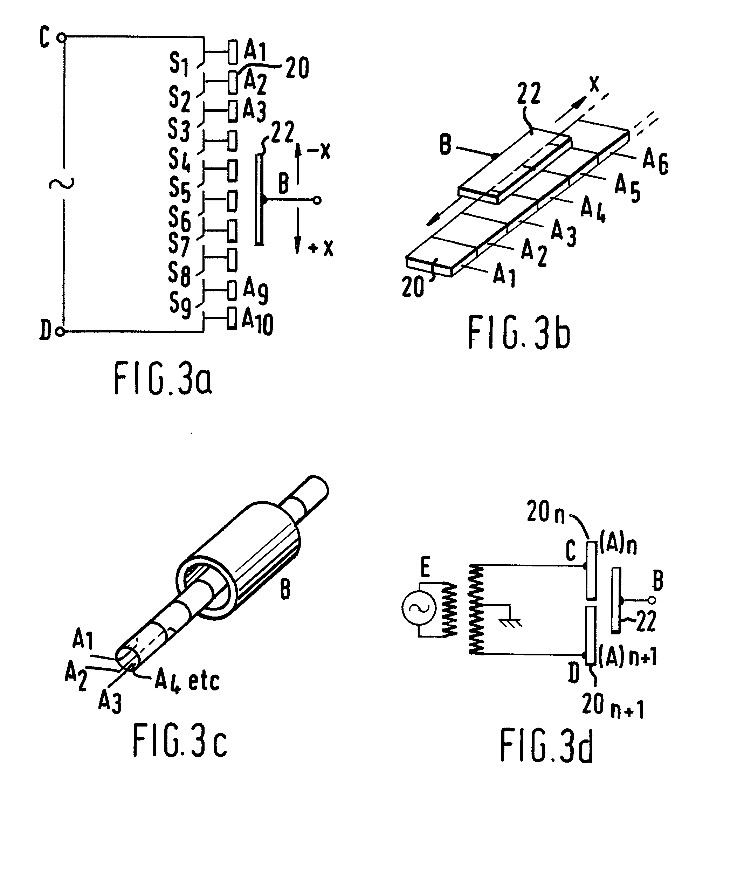

A further extension of this principle can apply to a transducer which is constructed so that as the range of operation is traversed, a number of segmented active areas are interconnected in a manner that will extend the range and stability of the transducer. In Figure 3a a linear capacitative displacement transducer is formed by a long row of discrete flat plates 20 arranged end to end. A single plate 22 moving along the line of the said series of plates has capacitative coupling to several of these plates. The row of plates is connected so that they form only two electrodes at any one time. As the moving plate 22 traverses along the line of plates $20_1$ to $20_{10}$ at potentials $A_1 - A_{10}$ it will have a capacitance to these plates. If the plates are energised by an ac signal E (Figure 3d) then plates 22, $20_n$ and $20_{(n + 1)}$ will form a differential capacitor and the voltage at 22 will vary according to how much plate 22 overlaps plate $20_n$ at potential C and plate $20_{(n + 1)}$ at potential D.

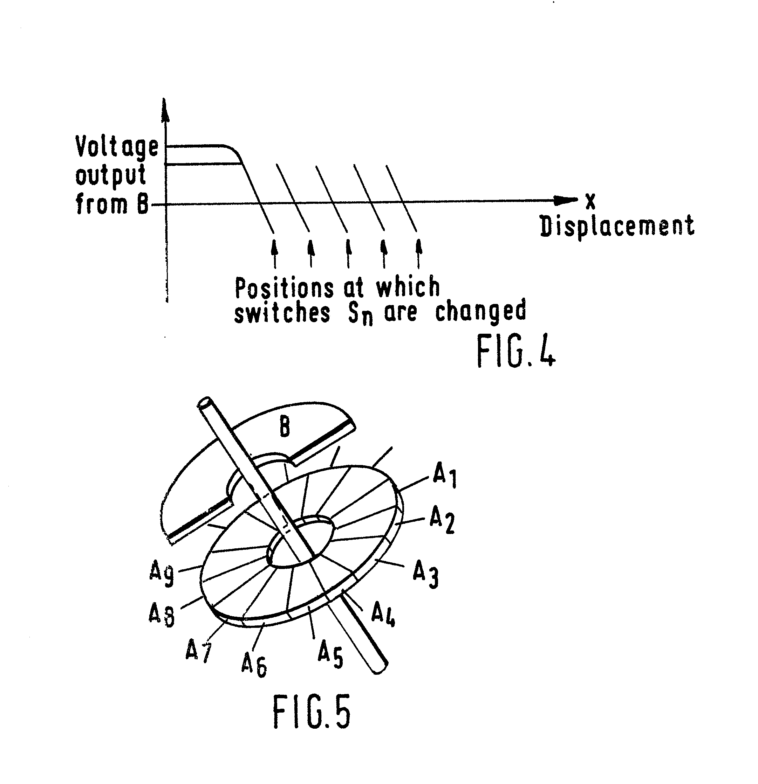

The switches $S_1$ to $S_{10}$ allow electrodes to be connected in groups. For example if $S_5$ is open and all the remaining switches $S_1$ to $S_{10}$ are closed, then the electrodes will be in two groups $A_1$ to $A_5$ and $A_6$ to $A_{10}$. As electrode B moves along the line of these electrodes its potential will vary as long as it straddles the potential gap between plate $20_5$ and plate $20_6$. As the edge of plate 22 approaches this gap, the switch $S_5$ can be closed, and $S_6$ opened. The potential gap has now been shifted along to between plate $20_6$ and plate $20_7$ and the linear range of the transducer operation extended, the output signal being shown in Figure 4.

In practice the exact geometrical position of the gaps between the segmented electrodes cannot be made precise. So when electrode connections are changed to shift the gap along, a correction must be made otherwise a discontinuity in calibration will occur. For this correction a digital number can be chosen which will exactly compensate for any error. In this way smooth and continuous output may be achieved from a segmented transducer of the form described. In addition of course a curvilinear correction as described above may be made across each traverse from one gap change to the next.

Such a transducer does not have to have flat plates and plates of cylindrical form (Figure 3c) may also be used.

This scheme is particularly although not exclusively applicable to angular displacement transducer (Figure 4). In this case an annular ring may be segmented into a series of arcuate electrodes. As the pick-off electrode rotates the electrical gap is rotated so as to be located always under the pick off. Each time a new electrode grouping is established by switching, then a new exact position is registered in the digital store. Positions between are interpolated, and the resulting output will present a continuous and exact signal representing the angular setting of one set of electrodes with respect to the other.

It will be appreciated that the underlying principle of this invention is that a unique digital representation of the transducer calibration which goes with the transducer is used to modify the apparent output to give a true output which conforms to a desired law.

CLAIMS:

1.    A transducer assembly comprising in combination:

a transducer module including an analog transducer 12 which gives a signal dependent on the value of a property being measured and a store associated with the transducer in which calibration data for the transducer is recorded in digital form;

a processor module including an analog to digital converter 13 for digitising the output signal from the transducer and digital calculating means 14 arranged to receive the signal from the analog to digital converter, obtain calibration data from the store, therefrom calculate a true value of the parameter and cause said true value to be supplied as an output; and

electrical connections 10 between the transducer module and the processor module connecting both the transducer 12 and its associated store to the processor module 14 so that when one transducer module is replaced by another similarly manufactured and calibrated transducer module the digital calculating means receives calibration data from the store associated with the new transducer and the assembly maintains a true output.

2.    A transducer according to claim 1, wherein the data recorded in the store are the coefficients in binary form of a polynomial expression defining a correcting function of the transducer.

3.    A transducer according to claim 2, wherein the polynomial expression is in the form $y = a + bx + cx^2 + dx^3$ (where x is the perceived value of the property and y is the true value) and the information recorded is the values of a, b, c and d.

4.    A linear capacitative displacement transducer according to claim 3.

5.      A transducer according to claim 4, wherein a moving plate is arranged to travel over a linear segmented fixed plate arranged so that there are only two active electrodes at any one time and the store contains calibration data for each segment and for discontinuities between segments.

6.      An angular capacitative displacement transducer according to claim 3 wherein a moving plate is arranged to travel over an annular segmented fixed plate arranged so that there are only two active electrodes at any one time and the store contains calibration data for each segment and for discontinuities between segments.

7.      A transducer assembly comprising a transducer member 12, a store associated with the transducer member in which calibration data for that transducer is recorded in digital form, which data may be used to modify the apparent output to give a true output corresponding to the intended transducer law, and electrical connections 10 to the transducer arranged so that whenever the transducer member is connected to a processor module the associated store is also connected thereto.

FIG.1

$y = a + bx + cx^2 + dx^3$
Correcting function

Transducer calibration before correction

Corrected transducer curve

FIG.2

2/3

0068604

FIG.3a

FIG.3b

FIG.3c

FIG.3d

Voltage
output
from B

Positions at which
switches $S_n$ are changed

x
Displacement

FIG.4

B

$A_1$
$A_2$
$A_3$
$A_4$
$A_5$
$A_6$
$A_7$
$A_8$
$A_9$

FIG.5